# EUROPÄISCHE PATENTSCHRIFT

(11) **EP 0 868 618 B1**
(45) Veröffentlichungstag und Bekanntmachung des Hinweises auf die Patenterteilung: **19.01.2000**
(21) Anmeldenummer: 96937125.1
(22) Anmeldetag: 15.11.1996
(51) Int. Cl.: F16H 47/04

(54) **VERFAHREN ZUM STEUERN EINES HYDROSTATISCH-MECHANISCHEN LEISTUNGSVERZWEIGUNGSGETRIEBES BEI UNBESTIMMTEN GETRIEBESTELLUNGEN**
METHOD OF CONTROLLING A POWER DISTRIBUTION HYDROMECHANICAL BRANCHED TRANSMISSION IN UNCERTAIN GEAR POSITIONS
PROCEDE DE COMMANDE D'UNE BOITE DE VITESSES HYDROSTATIQUE-MECANIQUE A DERIVATION DE PUISSANCE DANS DES POSITIONS INDETERMINEES D'EMBRAYAGE

(30) Priorität: 27.12.1995 DE 19548934
(43) Veröffentlichungstag der Anmeldung: 07.10.1998
(73) Patentinhaber: STEYR-DAIMLER-PUCH AKTIENGESELLSCHAFT, 1010 Wien (AT)
(72) Erfinder: WÖNTNER, Gebhard, A-4493 Wolfern (AT); LEITNER, Josef, A-4154 Kollerschlag (AT)
(86) Internationale Anmeldenummer: AT9600227
(87) Internationale Veröffentlichungsnummer: WO9724539

(56) Entgegenhaltungen:
- WO-A-90/02893
- WO-A-90/05864
- DE-A- 4 417 335
- DE-A- 19 510 179
- DE-A- 19 527 754

## Beschreibung

Die Erfindung handelt von Verfahren zum Steuern eines aus einer verstellbaren Hydrostateinheit, einem Summierungsplanetengetriebe mit mindestens zwei Ausgängen und einem nachgeschalteten als Doppelplanetengetriebe ausgebildeten Bereichsgetriebe bestehenden Leistungsverzweigungsgetriebes, bei dem n Stufen in Synchronpunkten aneinander anschließen, in denen Kupplungen geschaltet werden, wobei die mindestens zwei Ausgänge über eine erste Kupplung oder eine zweite Kupplung mit dem Bereichsgetriebe verbindbar sind und ein Glied des Bereichsgetriebes über eine dritte Kupplung festlegbar ist, und weitere Kupplungen für weitere Bereiche an der Abtriebsseite des Bereichsgetriebes vorgesehen sind.

Bei derartigen Getrieben (wie sie beispielsweise aus der EP 386 214 B bekannt sind) sorgt die Steuerung dafür, daß bei Änderung der Geschwindigkeit jeweils im richtigen Moment eine Bereichsschaltung vorgenommen wird. Erfolgt die Geschwindigkeitsänderung so schnell, daß die Steuerung nicht folgen kann (etwa bei einer Notbremsung), muß die Kupplung des gerade gewählten Bereiches geöffnet werden, um ein Abwürgen des Motors zu verhindern. Wenn die Notbremsung bis zum Stillstand des Fahrzeuges fortgesetzt wird, wird das Getriebe in die Grundstellung geführt und das Fahrzeug kann im ersten Fahrbereich anfahren.

Wird die Notbremsung nicht bis zum Stillstand des Fahrzeuges fortgesetzt, so ist in den höheren Bereichen ein Synchronisieren der geöffneten Kupplung durch Verstellen des Hydrostaten möglich. Notbremsungen werden aber meist fast bis zum Stillstand geführt. Dann ist ein Synchronisieren nicht mehr möglich, weil alle Kupplungen geöffnet werden müssen. Das Getriebe befindet sich in einer unbestimmten Schaltstellung, in der ein Ansynchronisieren der für den niedersten Bereich zu schließenden ersten Kupplung (K1) nicht möglich ist. Man muß somit bis zum völligen Stillstand abbremsen, um wieder beschleunigen zu können. Eine andere unbestimmte Schaltstellung liegt vor, wenn sich bei Neutralstellung des Fahrhebels das Fahrzeug etwa auf einer Gefällestrecke in Bewegung setzt. Auch dann ist es nach dem Stand der Technik nicht möglich, in einen Fahrbereich zu schalten.

Der Erfindung liegt somit die Aufgabe zugrunde, ein Steuerverfahren anzugeben, das das Einschalten eines zur momentanen Fahrgeschwindigkeit passenden Bereiches ohne vorherigen Stillstand jedenfalls sicherstellt, wenn eine Unterbrechung des Kraftflußes vorhergegangen ist.

Erfindungsgemäß wird das dadurch erreicht, daß unabhängig von der Stellung der dritten Kupplung und der weiteren Kupplungen, je nach momentaner Fahrgeschwindigkeit, die erste Kupplung oder die zweite Kupplung durch Verstellen des Hydrostaten synchronisiert und gekuppelt und entweder eine der weiteren Kupplungen oder die dritte Kupplung synchronisiert und dann eingerückt wird.

Im Falle einer nicht ganz bis zum Stillstand geführten Notbremsung besteht das Verfahren aus den in Anspruch 2 angeführten Schritten; Im Falle eines Wegrollens des Fahrzeuges bei in Neutralstellung befindlichem Getriebe in den in Anspruch 3 angeführten Schritten. Bei mit einer Kupplung für Rückwärtsfahrt ausgerüsteten Getrieben ist das Verfahren analog, das heißt gleich, wenn man an Stelle der dritten Kupplung die vierte Kupplung, das ist die für Rückwärtsfahrt, in der gleichen Weise betätigt.

Im folgenden wird die Erfindung anhand von Abbildungen beschrieben und erläutert. Es stellen dar:
- Fig.1:: Ein Schema eines Getriebes, das für die Ausführung des erfindungsgemäßen Verfahrens geeignet ist;
- Fig.2:: Einen Schaltplan;
- Fig.3 bis 5:: Die bei der Ausübung des Verfahrens durchlaufenen Schaltstellungen des Getriebes.

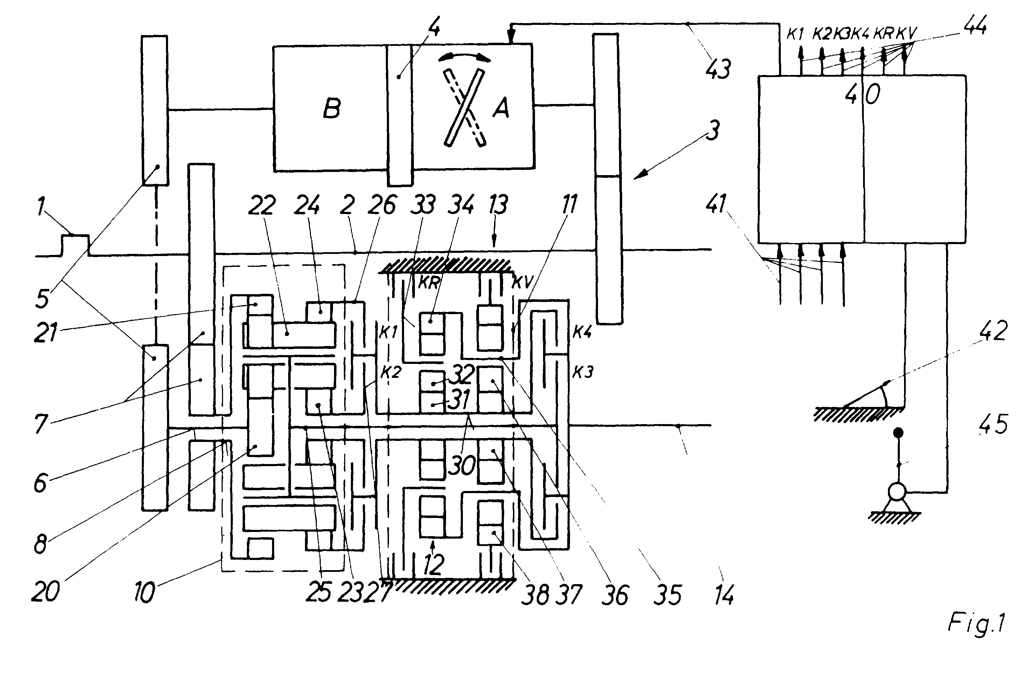

In Fig.1 ist der Motor 1, etwa eine Verbrennungskraftmaschine, nur angedeutet. Er treibt ohne der zwischen liegenden Kupplung eine Getriebeeingangswelle 2. Diese treibt einerseits über eine erste Zahnradtransmission 3 eine steuerbare Hydrostateinheit 4, deren Ausgang über eine zweite Zahnradtransmission 5 eine erste Eingangswelle 6 antreibt. Andererseits treibt die Getriebeeingangswelle 2 über eine dritte Zahnradtransmission 7 eine zweite Eingangswelle 8. Die Hydrostateinheit 4 besteht aus zwei hydrostatischen Maschinen A,B, wovon immer eine als Motor und eine als Pumpe arbeitet. Die Maschine A ist stufenlos in beiden Drehrichtungen steuerbar.

Die beiden Eingangswellen 6,8 sind Teil eines Summierungsplanetengetriebes 10, von dem aus über eine erste (K1) und eine zweite (K2) Kupplung K1,K2 ein Bereichsgetriebe 11 angetrieben wird, welches hier aus einer ersten Planetengetriebestufe 12 mit einer vierten Kupplung KR und einer zweiten Planetengetriebestufe 13 mit einer dritten Kupplung KV besteht. Über weitere Kupplungen K3,K4 wird eine Abtriebswelle 14 geschaltet, die beispielsweise dem Antrieb eines Fahrzeuges dient.

Das Summierungsplanetengetriebe 10 enthält eine erste Sonne 20, ein erstes Hohlrad 21 und abgestufte Planeten 22, die den ersten Planetensatz bilden. Der zweite Planetensatz besteht aus einer zweiten Sonne 23, einem Hohlrad 24 und den abgestuften Planeten 22, die beiden Sätzen gemeinsam sind. Die Planeten 22 sind auf einem Planetenträger gelagert, dessen Welle 25 die erste Ausgangswelle des Summierungsplanetengetriebes 10 darstellt. Das zweite Hohlrad 24 wirkt über eine Hohlradwelle 26 auf die erste Kupplung K1 und stellt die zweite Ausgangswelle dar. Die zweite Sonne 23 wirkt über eine Sonnenwelle 27 auf die zweite Kupplung K2 und stellt die dritte Ausgangswelle des Summierungsplanetengetriebes 10 dar.

Die erste Stufe 12 des Bereichsgetriebe 11 besteht aus einem ersten Sonnenrad 31, ersten Planetenrädern 32, einem ersten Planetenträger 33 und einem ersten Ringrad 34. Die Sonnenradwelle 30 wird wahlweise von einer der beiden Kupplungen K1,K2 angetrieben, der erste Planetenträger 33 ist mittels der Kupplung KR am stationären Gehäuse festbremsbar. Das erste Ringrad 34 ist mit einem zweiten Planetenträger 35 der zweiten Planetengetriebestufe 13 drehfest verbunden. Dessen Planetenräder 36 kämmen innen mit einem zweiten Sonnenrad 37, das mit der Sonnenradwelle 30 drehfest verbunden ist und außen mit einem zweiten Ringrad 38, welches über die dritte Kupplung KV am Gehäuse festbremsbar ist. Die Abtriebswelle 14 ist mit dem zweiten Planetenträger 35 drehfest verbunden und über die weiteren Kupplungen K3,K4 entweder mit der Planetenträgerwelle 25 oder mit der Sonnenradwelle 30 drehfest verbindbar.

Weiters ist ein Steuergerät 40 angedeutet. Dieses erhält über Signalleitungen 41 gemessene Betriebs- und Fahrparameter sowie von einem Fahrpedal 42 eine Last- bzw Geschwindigkeitsvorgabe. Aus diesen Signalen bildet das Steuergerät 40 Steuersignale für den Hydrostaten 4, die diesem über die Steuerleitung 43 übermittelt werden und Steuersignale 44 für die Kupplungen K1,K2, K3,K4,KR,KV. Schließlich ist noch ein Vorwählschalter 45 vorgesehen, den der Fahrer betätigt, um die andere Schaltstrategie über den weiteren Bereich zu wählen.

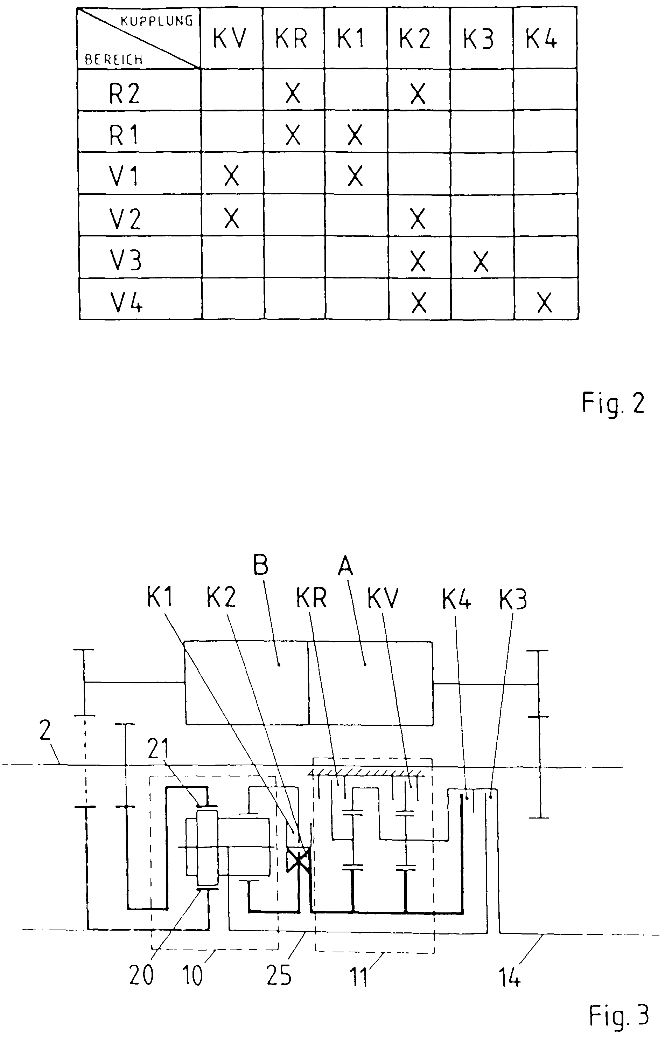

Fig.2 zeigt tabellarisch, welche Kupplungen in den einzelnen Fahrbereichen geschlossen sind, wobei der geschlossene Zustand durch ein X in der jeweiligen Zeile und Spalte angedeutet ist. In dem als Beispiel gewählten Getriebe sind zwei Rückwärtsbereiche R1,R2 und vier Vorwärtsbereiche V1,V2,V3 und V4 vorgesehen. Die sechs Zeilen entsprechen den Fahrbereichen. Es ist zu erkennen, welche Kupplungen für die Umschaltung von einem Bereich in den anderen zu öffnen beziehungsweise zu schließen sind.

Im folgenden wird anhand der Figuren 3 bis 5 die erfindungsgemäße Vorgangsweise nach einer nicht ganz bis zum Stillstand erfolgten Notbremsung beschrieben:

Bei einer Notbremsung aus dem vierten Fahrbereich wird vorerst nur die Kupplung K4 geöffnet; bei einer Notbremsung aus dem dritten Fahrbereich wird vorerst nur die Kupplung K3 geöffnet; bei einer Notbremsung aus dem zweiten Fahrbereich wird vorerst nur die Kupplung KV geöffnet. Damit bleibt die Sonnenradwelle 30 gewissermaßen eingefangen. Ihre Bewegung ist nicht mehr willkürlich, sondern durch Verstellung des Hydrostaten 4 regelbar. Das Getriebe befindet sich, egal in welchem der Bereiche die Notbremsung begann, in dem in Fig.3 gezeigten Zustand.

Durch die Notbremsung hat das Fahrzeug beinahe, aber eben nur beinahe, den Stillstand erreicht, das Fahrzeug fährt langsam weiter.

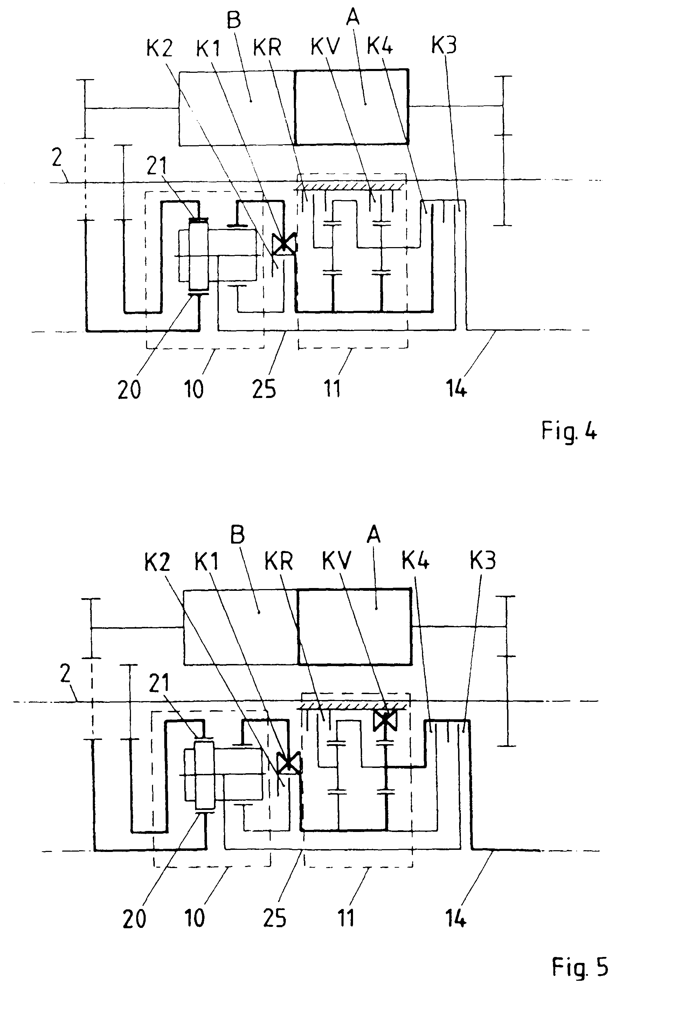

Gibt nun, noch bevor das Fahrzeug stillsteht, der Fahrer dem Steuergerät den Befehl, wieder zu beschleunigen, so muß der erste Bereich eingeschaltet werden. Durch Verstellen des Hydrostaten 4 in Richtung zu größerer Fördermenge, somit in Richtung auf einem Blockumlauf des Summierungsplanetengetriebes 10, wird Synchronlauf an der Kupplung K1 hergestellt. Dieser ist dann erreicht, wenn die Drehzahl des ersten Ausganges 26 gleich der der Sonnenradwelle 30 ist. Nun wird die erste Kupplung K1 geschlossen und anschließend die Kupplung K2 geöffnet. Dieses Stadium ist in Figur 4 zu sehen, es wurde in den Schritten b) und c) des zweiten Anspruches erreicht.

Nun wird gemäß Figur 5 durch weitere Verstellung des Hydrostaten an der Kupplung KV Drehzahlgleichheit hergestellt und diese geschlossen. Nun ist der Kraftfluß wieder hergestellt und das Fahrzeug kann beschleunigt werden.

Bei der Beschleunigung des Fahrzeuges durch äußere Kräfte gemäß Anspruch 3 wird ähnlich vorgegangen. Der Unterschied besteht darin, daß, entsprechend dem einer Notbremsung entgegengesetzten Geschwindigkeitsverlauf, zuerst die zweite Kupplung K2 synchronisiert und geschlossen, und dann, je nach der mittlerweile erreichten Geschwindigkeit eine der weiteren Kupplungen K3 oder K4 synchronisiert und geschlossen wird.

## Patentansprüche

1. Verfahren zum Steuern eines aus einer verstellbaren Hydrostateinheit (4), einem Summierungsplanetengetriebe (10) mit mindestens zwei Ausgängen (26,27) und einem nachgeschalteten als Doppelplanetengetriebe ausgebildeten Bereichsgetriebe (11) bestehenden Leistungsverzweigungsgetriebes, bei dem n Stufen in Synchronpunkten aneinander anschließen, in welchen Punkten Kupplungen geschaltet werden, wobei die mindestens zwei Ausgänge (26,27) über eine erste Kupplung (K1) oder eine zweite Kupplung (K2) mit dem Bereichsgetriebe (11) verbindbar sind und ein Glied des Bereichsgetriebes (11) über eine dritte Kupplung (KV) festlegbar ist, und weitere Kupplungen (K3,K4) für weitere Bereiche an der Abtriebsseite des Bereichsgetriebes vorgesehen sind, **dadurch gekennzeichnet,** daß in Fahrzuständen, bei denen eine Kraftflußunterbrechung notwendig ist, unabhängig von der Stellung der dritten Kupplung (KV) und der weiteren Kupplungen (K3,K4), je nach momentaner Fahrgeschwindigkeit, die erste Kupplung (K1) oder die zweite Kupplung (K2) durch Verstellen des Hydrostaten (4) synchronisiert und gekuppelt und sodann erst, entweder eine der weiteren Kupplungen (K3,K4) oder die dritte Kupplung (KV) synchronisiert und dann eingerückt wird.

2. Verfahren nach Anspruch 1, **dadurch gekennzeichnet,** daß nach einer nicht bis zum Stillstand des Fahrzeuges vorgenommenen Notbremsung aus einem der weiteren Bereiche in den der Reihe nach folgenden Schritten in einen niederen Gang geschaltet wird:
a) Die Kupplung (K3,K4) für den jeweiligen Bereich wird geöffnet,
b) durch Verstellen des Hydrostaten (4) in Richtung auf Blockumlauf des Summierungsplanetengetriebes (10) hin wird an der ersten Kupplung (K1) und an der zweiten Kupplung (K2) Synchronlauf hergestellt,
c) die erste Kupplung (Kl) wird geschlossen und die zweite Kupplung (K2) wird geöffnet beziehungsweise offen gehalten,
d) an der dritten Kupplung (KV) wird durch Verstellen des Hydrostaten (4) Drehzahlgleichheit entsprechend der momentanen Fahrgeschwindigkeit eingestellt,
e) dann erst wird die dritte Kupplung (KV) geschlossen und dadurch der Kraftfluß wiederhergestellt.

3. Verfahren nach Anspruch 1, **dadurch gekennzeichnet,** daß bei Beschleunigung des Fahrzeuges durch äussere Kräfte aus einer niederen Geschwindigkeit in folgenden Schritten in einen höheren Bereich geschaltet wird:
a) die dritte Kupplung (KV) wird geöffnet,
b) durch Verstellen des Hydrostaten (4) wird an der ersten Kupplung (K1) und an der zweiten Kupplung (K2) Synchronlauf hergestellt,
c) die zweite Kupplung (K2) wird geschlossen und die erste Kupplung (Kl) wird geöffnet beziehungsweise offen gehalten,
d) sobald die zweite Kupplung (K2) geschlossen ist, wird an einer der weiteren Kupplungen (K3) oder (K4), entsprechend der momentanen Fahrgeschwindigkeit, Synchronlauf hergestellt,
e) dann wird eine der weiteren Kupplungen (K3) oder (K4) geschlossen und so der Kraftfluß wiederhergestellt.

4. Verfahren nach Anspruch 1 für ein Leistungsverzweigungsgetriebe mit einer vierten Kupplung (KR) für Rückwärtsfahrt, bei dem in Rückwärts-Fahrzuständen, bei denen die Getriebeschaltstellung unbestimmt ist, unabhängig von der Stellung der vierten Kupplung (KR) und der weiteren Kupplungen (K3,K4), je nach momentaner Fahrgeschwindigkeit, die erste Kupplung (K1) oder die zweite Kupplung (K2) durch Verstellen des Hydrostaten synchronisiert und gekuppelt und dann entweder eine der weiteren Kupplungen (K3,K4) oder die vierte Kupplung (KR) synchronisiert und dann eingerückt wird.

## Claims

1. Method for controlling a power-dividing transmission which comprises an adjustable hydrostat unit(4), a summating planet transmission (10) with at least two outputs (26, 27), and a downstream motion gear transnission (11) designed as a dual planet transmission, and in which n stages follow one another at synchronous points, at which points clutches arc connected, in which the at least two outputs (26, 27) arc connectable to the motion gear transmission (11) via a first clutch (K1) or a second clutch (K2) and an element of the motion gear transmission (11) is arrestable via a third clutch (KV), and further clutches (K3, K4) for further motion gears are provided at the offtake side of the motion gear transmission, wherein, in conditions of travel in which an inten-uption of the power transmission is necessary, irrespective of the position of the third clutch (KV) and of the further clutches (K3, K4), depending upon the instantaneous speed of travel, the first clutch (K1) or the second clutch (K2) is synchronized and engaged by adjustment of the hydrostat (4) and, only then, either one of the further clutches (K3, K4) or the third clutch (KV) is synchronized and then engaged.

2. The method as claimed in claim 1, wherein, after an emergency braking which is not undertaken to standstill of the vehicle, from one of the further motion gears, switching takes place to a lower gear in the sequentially following steps:
a) The clutch (K3, K4) for the respective motion gear is disengaged,
b) by adjustment of the hydrostat (4) in the direction towards block rotation of the summating planet transmission (10), synchronous running is created at the first clutch (K1) and at the second clutch (K2),
c) the first clutch (K1) is engaged and the second clutch (K2) is disengaged or maintained in the disengaged condition,
d) by adjustment of the hydrostat (4), equality of speed of rotation is set at the third clutch (KV) in a manner corresponding to the instantaneous speed of travel,
e) only then is the third clutch (KV) engaged, and thereby the power transmission restored.

3. The method as claimed in claim 1, wherein, in the case of acceleration of the vehicle by external forces, switching takes place from a low speed into a higher motion gear in the following steps:
a) The third clutch (KV) is disengaged,
b) by adjustment of the hydrostat (4), synchronous running is created at the first clutch (K1) and at the second clutch (K2),
c) the second clutch (K2) is engaged and the first clutch (K1) is disengaged or maintained in the disengaged condition,
d) as soon as the second clutch (K2) has been engaged, synchronous running is created at one of the further clutches (K3) or (K4), in a manner corresponding to the instantaneous speed of travel,
e) one of the further clutches (K3) or (K4) is then engaged, and the power transmission is thus restored.

4. The method as claimed in claim 1 for a power-dividing transmission having a fourth clutch (KR) for travel in reverse in which, in conditions of travel in reverse in which the transmission switching position is undefined, irrespective of the position of the fourth clutch (KR) and of the further clutches (K3, K4), depending upon the instantaneous speed of travel, the first clutch (K1) or the second clutch (K2) is synchronized and engaged by adjustment of the hydrostat, and then either one of the further clutches (K3, K4) or the fourth clutch (KR) is synchronized and then engaged.

## Revendications

1. Procédé pour commander une boîte de vitesses à dérivation de puissance constituée d'une unité hydrostatique réglable (4), d'un engrenage planétaire composite (10) comportant au moins deux éléments de sortie (26, 27) et un mécanisme de rapports d'entraînement (11) placé en aval et se présentant sous la forme d'un double engrenage planétaire, dans lequel on raccorde n étages entre eux en des points synchrones, où on engage des embrayages, de sorte que les au moins deux éléments de sortie (26, 27) peuvent être raccordés par un premier embrayage (K1) ou un deuxième embrayage (K2) au mécanisme de rapports d'entraînement (11) et qu'un élément du mécanisme de rapports d'entraînement (11) peut être déterminé par un troisième embrayage (KV), et dans lequel d'autres embrayages (K3, K4) sont prévus pour d'autres rapports d'entraînement en sortie du mécanisme de rapports d'entraînement, caractérisé en ce que, à des états de marche, dans lesquels une interruption de puissance est nécessaire, indépendamment de la position du troisième embrayage (KV) et des autres embrayages (K3, K4), selon la vitesse instantanée, le premier embrayage (K1) ou le deuxième embrayage (K2) est synchronisé et couplé en réglant l'élément hydrostatique (4), puis ensuite soit un des autres embrayages (K3, K4) soit le troisième embrayage (KV) est synchronisé puis engagé.

2. Procédé selon la revendication 1, caractérisé en ce que, après un freinage d'urgence n'entraînant pas l'arrêt du véhicule, on passe d'un des autres rapports à un rapport inférieur en se conformant aux étapes consécutives suivantes consistant à :
a) désengager l'embrayage (K3, K4) pour le rapport correspondant,
b) obtenir une marche synchrone au niveau du premier embrayage (K1) et du deuxième embrayage (K2) en réglant l'élément hydrostatique (4) dans le sans d'une rotation complète de l'engrenage planétaire comosite (10),
c) engager le premier embrayage (K1) et désengager, ou maintenir désengagé, le deuxième embrayage (K2),
d) déterminer, au niveau du troisième embrayage (KV), l'égalité du nombre de tours correspondant à la vitesse instantanée en réglant l'élément hydrostatique (4),
e) engager alors ensuite le troisième embrayage (KV) de façon à rétablir la puissance.

3. Procédé selon la revendication 1, caractérisé en ce que, lors de l'accélération du véhicule par des forces extérieures, on passe d'un rapport de vitesse inférieur à un rapport supérieur en se conformant aux étapes consécutives suivantes consistant à :
a) désengager le troisième embrayage (KV),
b) obtenir une marche synchrone au niveau du premier embrayage (K1) et du deuxième embrayage (K2) en réglant l'élément hydrostatique (4),
c) engager le deuxième embrayage (K2) et désengager, ou maintenir désengagé le premier embrayage (K1),
d) obtenir, dès que le deuxième embrayage (K2) est engagé, une marche synchrone au niveau d'un des autres embrayages (K3) ou (K4), conformément à la vitesse instantanée,
e) engager alors ensuite un des autres embrayages (K3) ou (K4) de façon à rétablir la puissance.

4. Procédé selon la revendication 1, pour une boîte de vitesses à dérivation de puissance comportant un quatrième embrayage (KR) pour la marche arrière, dans lequel, dans les états de marche arrière où la boîte de vitesses se trouve dans une position de changement de rapport indéterminée, indépendamment de la position du quatrième embrayage (KR) et des autres embrayages (K3, K4), selon la vitesse instantanée du véhicule, le premier embrayage (K1) ou le deuxième embrayage (K2) est synchronisé et couplé en réglant l'élément hydrostatique, puis ensuite soit un des autres embrayages (K3, K4) soit le quatrième engrenage (KR) est synchronisé puis engagé.
